# EUROPEAN PATENT SPECIFICATION

(11) **EP 4 574 399 B1**
(45) Date of publication and mention of the grant of the patent: **21.10.2026**
(21) Application number: 24221525.9
(22) Date of filing: 19.12.2024
(51) Int. Cl.: B29C 65/02, B29C 65/48, B29C 65/56, B29C 65/58, B29C 65/72, B29C 65/78, B60N 2/70, B29C 65/06, B29C 65/08, B29C 65/18, B29L 31/00, B29L 31/30, B29L 31/58

(54) **CUSHION ASSEMBLY**
KISSENANORDNUNG
ENSEMBLE DE COUSSIN

(30) Priority: 22.12.2023 US 202363613925 P; 30.07.2024 DK PA202470202; 13.12.2024 US 202418980826
(43) Date of publication of application: 25.06.2025
(73) Proprietor: Lear Corporation, Southfield, MI 48033 (US)
(72) Inventor: Hudson, Curtis, Macomb, Michigan 48042 (US); Johnson, Christopher D., Novi, Michigan 48377 (US); Liu, Haifeng, Novi, Michigan 48374 (US); Brudzynsky, Michelle A., Farmington Hills, Michigan 48331 (US); Valenzuela, Ibrahim, Novi, Michigan 48375 (US); Repke, Eric, Milford, Michigan 48380 (US); Swikoski, Lisa, West Bloomfield, Michigan 48324 (US)
(74) Representative: Grünecker Patent- und Rechtsanwälte PartG mbB

(56) References cited:
- WO-A1-2023/244727
- US-A1- 2019 002 272

## Description

### TECHNICAL FIELD

Various embodiments related to cushions formed from a unitary mesh of expanded thermoplastic resin strands. US2019002272A1 discloses a method and apparatus for processing a fiber cushion body. WO2023244727A1 discloses a vehicle seat assembly and subassemblies thereof.

The objective technical problem is how to provide an alternative or improved cushion assembly. The objective technical problem is at least solved by a cushion assembly according to claim 1.

### BRIEF DESCRIPTION OF THE DRAWINGS

FIGURE 1 is a front perspective view of a seat assembly according to an embodiment;
FIGURE 2 is a top perspective view of a cushion assembly of the seat assembly of Figure 1, according to an embodiment;
FIGURE 3 is a top perspective view of a cushion assembly of the seat assembly of Figure 1, according to another embodiment;
FIGURE 4 is a front perspective view of a manufacturing process of a cushion assembly of the seat assembly of Figure 1, according to another embodiment;
FIGURE 5 is a side elevation view of the manufacturing process of the cushion assembly of Figure 5, illustrated in an intermediate manufacturing step;
FIGURE 6 is side elevation view of the manufacturing process of the cushion assembly of Figure 5, illustrated in another manufacturing step;
FIGURE 7 is a side elevation view of the assembled cushion assembly of Figure 5;
FIGURE 8 is a front elevation view of the cushion assembly of Figure 7;
FIGURE 9 is a front view of a trim cover of the cushion assembly of Figure 1 according to an embodiment; and
FIGURE 10 is an exploded front perspective view of the cushion assembly of Figure 9.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

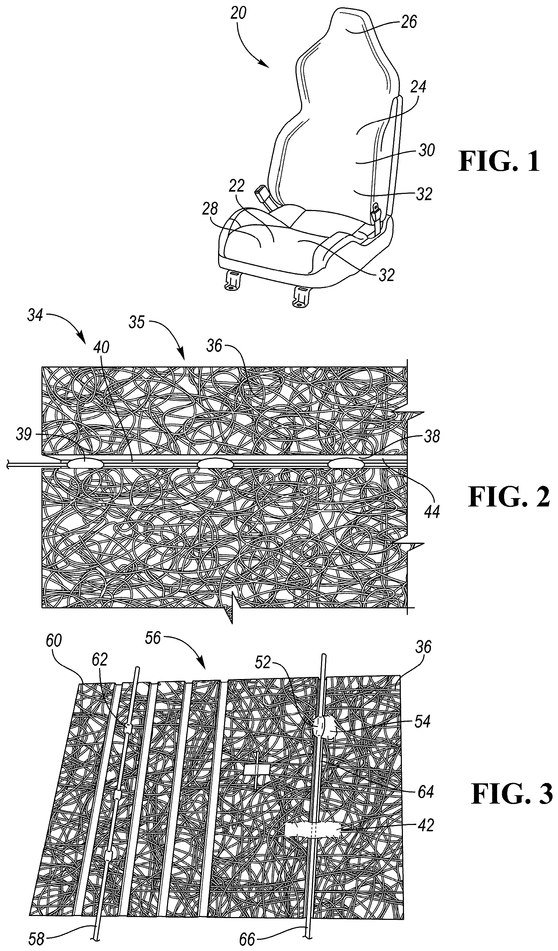

Figure 1 illustrates a seat assembly 20 as a vehicle seat assembly 20 according to an embodiment. Although the vehicle seat assembly 20 is illustrated and described, any seat assembly 20 may be employed. The seat assembly 20 may be utilized in a land vehicle, aircraft, watercraft, or the like. The seat assembly 20 may also be utilized as an office chair, comfort chair, or the like.

The depicted seat assembly 20 includes a seat bottom 22, a seat back 24, and a head restraint 26. The seat bottom 22 is provided with a seat bottom cushion 28 to support a pelvis and thighs of a seated occupant. The seat back 24 includes a seat back cushion 30 to support a back and shoulders of the seated occupant. A trim cover 32 is provided over the seat cushions 28, 30 to conceal the cushions 28, 30 and provide a uniform and smooth contact surface for the occupant.

Referring to Figure 2 generally, a cushion assembly 34 is illustrated, disassembled from the seat assembly 20. In the shown embodiment, the cushion assembly 34 includes a cushion body 35 formed from a unitary mesh of expanded thermoplastic resin strands 36. The cushion body 35 may be fabricated according to the teachings of Blair et al. US Patent Application Publication No. US 2023/0191678 A1, which published to Lear Corporation on June 22, 2023. The cushion body 35 may also be formed from a foam material according to another embodiment. The cushion assembly 34 provides support to an occupant upon the seat assembly 20. The cushion assembly 34 is elastically deformable and provides comfort to the occupant, while supporting the occupant.

The cushion assembly 34 is a non-foam component or includes at least one non-foam component. The non-foam component is primarily referred to as a mesh member but may also be referred to as a stranded member, looped member, entangled member, filament mesh structure, mesh structure, stranded mesh, looped mesh, entangled mesh, or mesh cushion. In Figure 2, the cushion assembly 34 is depicted as a non-foam component that does not include a foam component or foam material, such as urethane or polyurethane foam; however, it is contemplated that the cushion assembly 34 may also include a foam component or foam material in addition to a non-foam component to provide additional cushioning or localized cushioning for a seat occupant. For example, foam material may be provided between the cushion assembly 34 and the trim cover 32 that is disposed on the cushion assembly 34, within the cushion assembly 34, or combinations thereof. Reducing the amount of foam material that is provided with the cushion assembly 34 or eliminating foam material from the cushion assembly 34 reduces weight and may improve support and comfort of a seat occupant. In addition, eliminating foam material may facilitate recycling of the cushion assembly 34.

The cushion assembly 34 is described below in the context of a cushion assembly 34 that does not include foam material. In this context, the cushion assembly 34 is made of filaments 36 of polymeric material that are randomly looped, bent, curled, or entangled and are bonded together as will be discussed in more detail below. A filament 36 is directed bonded to another filament 36 rather than being indirectly bonded with a resin or other intermediate material.

The filaments 36, which may also be referred to as strands or threads, are made of any suitable material or materials. In some configurations, the filaments 36 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low density polyethylene (LLPDE). The filament material may be recyclable unlike foam material or more easily recycled than foam material. It is also contemplated that a filament 36 may comprise reinforcement fibers and that the reinforcement fibers may not be made of a thermoplastic material.

In some configurations, a filament 36 may be a monofilament that is made of a single material. In some configurations, a filament 36 is made of multiple materials. As an example, a filament 36 made of multiple materials may include a core that is made of a first thermoplastic material and a sheath that encircles the core and is made of a second thermoplastic material that differs from the first thermoplastic material. It is contemplated that the cushion assembly 34 may include a combination of monofilaments and filaments that are made of multiple materials and are not monofilaments.

Filaments 36 that are randomly looped, bent, looped, curled, or entangled are bonded together where one filament 36 contacts another filament 36, thereby resulting in a lightweight, air permeable cushion assembly 34 or mesh structure having openings or voids between the filaments 36.

The cushion assembly 34 is installed within the trim cover (Figure 1). In order to attach the cushion assembly 34 to other seating components, the cushion assembly includes a trim cord 40. The trim cord 40 can be attached to other seating components, such as a seat frame, a seating suspension, or the like. The trim cord 40 may also be utilized to attach other components to the cushion assembly 34, such as the trim cover 32. The trim cord 40 may be formed of any suitable material, such as a structural and flexible material, for example, a polyethylene material. Alternatively, the trim cord 40 may be formed from a steel wire.

The cushion assembly 34 is provided with an aperture 38 formed therein. In the depicted embodiment, the aperture 38 is a slot or trench 38 formed along a length of the body 35. If another cushion body 35 is stacked upon the cushion body 35, then the trench 38 may be concealed along its length with aperture openings at the distal ends of the trench 38. The trim cord 40 is inserted within the trench 38. In order to maintain the trim cord 40 within the cushion body 35, the trim cord 40 is welded to the body 35 at welds 39 within the trench 38, according to the depicted embodiment. The trim cord 40 may be welded by friction welding, ultrasonic welding, heat staking, or the like, such that the trim cord 40 is bonded to, and integral with, the body 35. Alternatively, an additional weld 39 material may be melted and deposited to cool and bond the trim cord 40 to the body 35. According to another embodiment, the trim cord 40 is welded to the cushion body 35 without an additional adhesive.

Referring to Figure 3, another cushion assembly 56 is illustrated, disassembled from the seat assembly 20. The cushion assembly 56 includes a cushion body 60 that is formed from a unitary mesh of expanded thermoplastic resin strands 36. The cushion body 60 may also be formed from a generic foam material according to another embodiment. The cushion assembly 56 may the same as the cushion assembly 34 of Figure 2, or may be another cushion assembly 56 as depicted.

The cushion assembly 56 includes a trim cord 58 that is bonded to the cushion body 60 at connections 62. According to one embodiment, the connections 62 are heat stakes that partially melt the trim cord 58 and the cushion body 60 to bond the trim cord 58 to the cushion body 60. According to another embodiment, the connections 62 are welds 62.

The cushion assembly 56 is provided with an aperture 64 formed therein and a trim cord 66 inserted within the aperture 64. The trim cord 66 may be formed of a polyethylene material. The aperture 64 is depicted as a trench 64. Figure 3 illustrates another method of installing the trim cord 66 into the aperture 64 according to an embodiment. A segment of expanded thermoplastic resin strands 42 is welded to the unitary mesh of expanded thermoplastic resin strands 36 at least partially over the aperture 64. In the illustrated embodiment, a first segment 52 of expanded thermoplastic resin strands is welded to a second segment 54 of expanded thermoplastic resin strands, at least partially over the aperture 64.

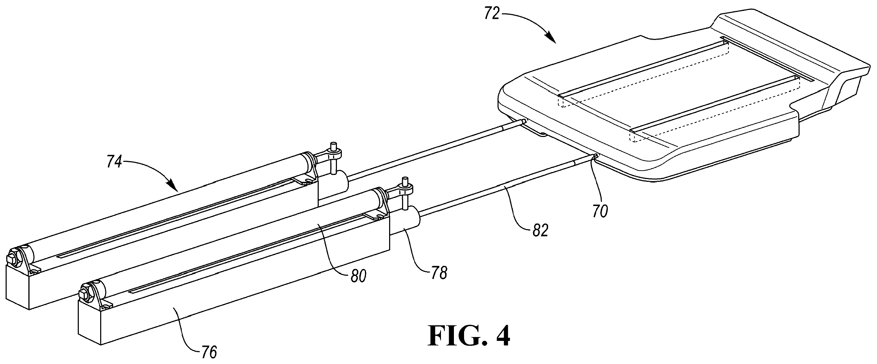

Figures 4-6 illustrate a method and system to insert a trim cord 68 into an aperture 70 of a cushion body 72. The cushion body 72 may be formed from foam, a unitary mesh of extruded thermoplastic resin, or any suitable material. A linear actuator assembly 74 is provided to install the trim cords 68 into the cushion body 72. The linear actuator assembly 74 may be utilized without welding the trim cord 68 to the cushion body 72. The linear actuator assembly 74 includes a pair of bases 76, which provides a pair of guides. A pair of sliders 78 is installed in the bases 76 for translation relative to the bases 76. A pair of linear actuators, such as pneumatic cylinders 80, is installed on the bases 76, and connected to distal ends of the sliders 78 to extend and retract the sliders 78 relative to the bases 76. An elongate end effector 82 is mounted to each slider 78. Although a pair of bases 76, sliders 78, linear actuators 80, and end effectors 82 is illustrated and described, any quantity may be employed to install any quantity of trim cords 68.

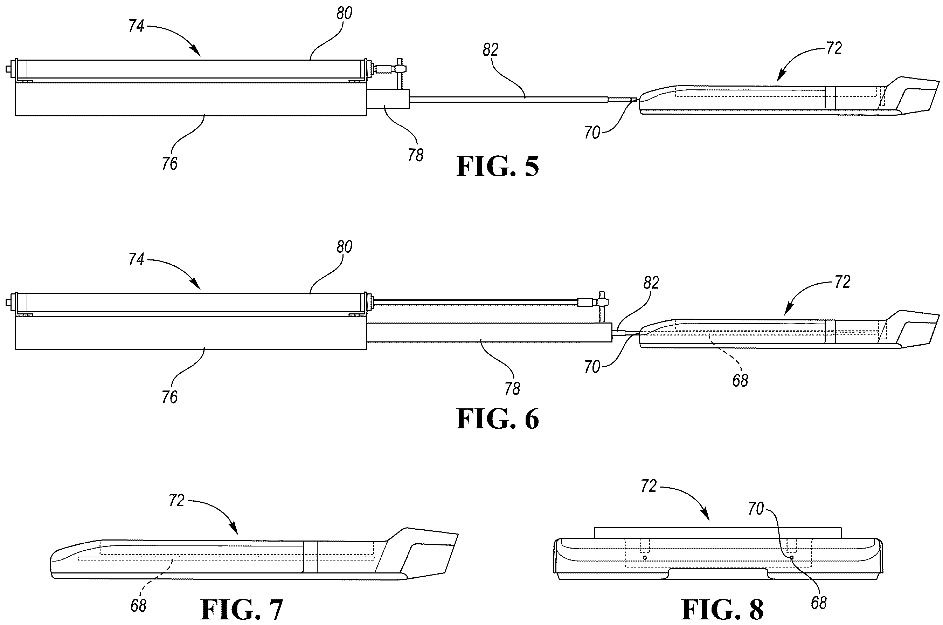

Figures 4 and 5 illustrate the linear actuator assembly 74 in an idle position whereby the cushion body 72 is presented proximate to distal ends of the end effectors 82. In Figure 6, the linear actuators 80 extend the sliders 78 from the bases 76 such that the end effectors 82 are inserted into the cushion body 72. In the extended position of Figure 6, the end effectors 82 release trim cords 68 into the cushion body 72. Then, the linear actuators 80 are retracted to the idle position of Figure 4 and 5.

Figures 7 and 8 illustrate the cushion body 72 with the trim cord 68 installed. The aperture 70 of the unitary mesh 36 has an inner dimension, and the trim cord 68 has an outer dimension, such as a cross section, that is smaller than the inner dimension of the aperture 70. The cross section of the trim cord 68 is larger than three millimeters, and smaller than five millimeters in some embodiments. The inner dimension 44 of the aperture 70 is at least five millimeters larger than the cross section of the trim cord 68 in some embodiments. Additionally, the inner dimension 44 of the aperture 70 is smaller than ten millimeters in some embodiments. The inner dimension 44 of the aperture 70 is 100-166 percent larger than the cross section of the trim cord 68 in some embodiments.

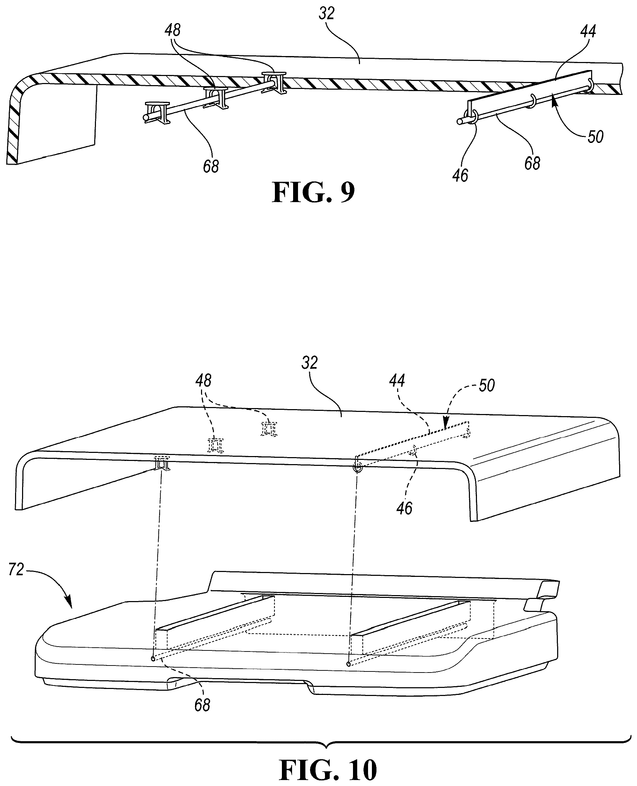

Figure 9 illustrates the trim cover 32 of the seat assembly 20 according to various embodiments. Figure 10 illustrates the cushion body 72 with the trim cover 32 of the seat assembly 20. The trim cover 32 is attachable to the trim cord 68. In some embodiments, the trim cover 32 is provided with a plurality of clips 48 sewn to the trim cover 32. The clips 48 are sized to receive the trim cord 68 and retain the trim cord 68 to the unitary mesh 36. The trim cover 32 may also be provided with a fastener assembly 50 attached to the trim cover 32. The fastener assembly 50 is sized to receive the trim cord 68 and retain the trim cord 68 to the unitary mesh 36.

The fastener assembly 50 includes a strip or wire 44 that is sewn to the trim cover 32. According to some embodiments, the wire 44 may be a metal wire 44. The fastener assembly 50 also includes a plurality of hog rings 46, which are rings with a discontinuous loop that is deformed by a tool to close the loop and provide the fastened connection. The hog rings 46 connect the wire 44 to the trim cord 68. The hog rings 46 are installed and closed about the wire 44 and the trim cord 68. According to another embodiment, the hog rings 46 may be installed and closed about the wire 44, and then the trim cord 68 may subsequently be installed into the closed hog rings 46.

## Claims

1. A cushion assembly (34, 56) for a seat assembly (20) comprising:
a unitary mesh of expanded thermoplastic resin strands (36) with an aperture (38, 64, 70) formed therein; and
a trim cord (40, 58, 66, 68) inserted within the aperture (38, 64, 70) of the unitary mesh (36);
wherein the trim cord (40, 58, 66, 68) is installed into the aperture (38, 64, 70) by one or more of: the trim cord (40, 58, 66, 68) is welded to the unitary mesh of expanded thermoplastic resin strands (36), or a first segment (52) of expanded thermoplastic resin strands is welded to a second segment (54) of expanded thermoplastic resin strands at least partially over the aperture (38, 64, 70),
and wherein an inner dimension of the aperture (38, 64, 70) in the unitary mesh (36) is 100-166 percent larger than a cross section dimension of the trim cord (40, 58, 66, 68).

2. The cushion assembly of claim 1, wherein the trim cord (40, 58, 66, 68, 66) is welded to a region of the unitary mesh of expanded thermoplastic resin strands (36) within a trench (64) formed in the unitary mesh (36).

3. The cushion assembly of claim 1 or 2, wherein the trim cord (40, 58, 66, 68) is welded to the unitary mesh of expanded thermoplastic resin strands (36).

4. The cushion assembly of any of the preceding claims, wherein the trim cord (40, 58, 66, 68) is welded without adhesive.

5. The cushion assembly of any of the preceding claims, wherein a segment (52) of expanded thermoplastic resin strands is welded to the unitary mesh of expanded thermoplastic resin strands (36) at least partially over the aperture (38, 64, 70).

6. The cushion assembly of any of the preceding claims, wherein the aperture (38, 64, 70) of the unitary mesh (36) has an inner dimension, and wherein the trim cord (40, 58, 66, 68) has a cross section that is smaller than the inner dimension of the aperture (38, 64, 70),
and wherein preferably the cross section of the trim cord (40, 58, 66, 68) is larger than three millimeters.

7. The cushion assembly of claim 6, wherein the cross section of the trim cord (40, 58, 66, 68) is smaller than five millimeters.

8. The cushion assembly of any of claims 6 or 7, wherein the inner dimension of the aperture (38, 64, 70) in the unitary mesh (36) is at least five millimeters larger than the cross section of the trim cord (40, 58, 66, 68),
and/or wherein the inner dimension of the aperture (38, 64, 70) in the unitary mesh (36) is smaller than ten millimeters.

9. The cushion assembly of any of the preceding claims, further comprising a trim cover (32), and at least one clip (48) sewn to the trim cover (32), wherein the clip (48) is sized to receive the trim cord (40, 58, 66, 68) and retain the trim cover (32) to the unitary mesh (36).

10. The cushion assembly of any of the preceding claims, further comprising a trim cover (32), a wire (44) sewn to the trim cover (32), and at least one ring (46) to attach the trim cord (40, 58, 66, 68) to the wire (44).

11. The cushion assembly of any of the preceding claims, further comprising a trim cover (32), and at least one fastener (50) sewn into the trim cover (32), wherein the fastener (50) is sized to receive the trim cord (40, 58, 66, 68) and retain the trim cover (32) to the unitary mesh (36).

## Patentansprüche

1. Polsteranordnung (34, 56) für eine Sitzanordnung (20), umfassend:
ein einheitliches Netz aus expandierten thermoplastischen Harzfäden (36) mit einer darin ausgebildeten Öffnung (38, 64, 70); und
eine Zierschnur (40, 58, 66, 68), die in die Öffnung (38, 64, 70) des einheitlichen Netzes (36) eingesetzt ist;
wobei die Zierschnur (40, 58, 66, 68) auf eine oder mehrere der folgenden Weisen in die Öffnung (38, 64, 70) eingebracht ist: die Zierschnur (40, 58, 66, 68) ist mit dem einheitlichen Netz aus expandierten thermoplastischen Harzfäden (36) verschweißt, oder ein erster Abschnitt (52) aus expandierten thermoplastischen Harzfäden ist mit einem zweiten Abschnitt (54) aus expandierten thermoplastischen Harzfäden zumindest teilweise über der Öffnung (38, 64, 70) verschweißt, und
wobei ein Innenmaß der Öffnung (38, 64, 70) in dem einheitlichen Netz (36) um 100-166 Prozent größer ist als ein Querschnittsmaß der Zierschnur (40, 58, 66, 68).

2. Polsteranordnung nach Anspruch 1, wobei die Zierschnur (40, 58, 66, 68, 66) mit einem Bereich des einheitlichen Netzes aus expandierten thermoplastischen Harzfäden (36) innerhalb einer Aussparung (64) verschweißt ist, die in dem einheitlichen Netz (36) ausgebildet ist.

3. Polsteranordnung nach Anspruch 1 oder 2, wobei die Zierschnur (40, 58, 66, 68) mit dem einheitlichen Netz aus expandierten thermoplastischen Harzfäden (36) verschweißt ist.

4. Polsteranordnung nach einem der vorhergehenden Ansprüche, wobei die Zierschnur (40, 58, 66, 68) ohne Klebstoff verschweißt ist.

5. Polsteranordnung nach einem der vorhergehenden Ansprüche, wobei ein Abschnitt (52) aus expandierten thermoplastischen Harzfäden mit dem einheitlichen Netz aus expandierten thermoplastischen Harzfäden (36) zumindest teilweise über der Öffnung (38, 64, 70) verschweißt ist.

6. Polsteranordnung nach einem der vorhergehenden Ansprüche,
wobei die Öffnung (38, 64, 70) des einheitlichen Netzes (36) ein Innenmaß aufweist und wobei die Zierschnur (40, 58, 66, 68) einen Querschnitt aufweist, der kleiner ist als das Innenmaß der Öffnung (38, 64, 70), und
wobei vorzugsweise der Querschnitt der Zierschnur (40, 58, 66, 68) größer als drei Millimeter ist.

7. Polsteranordnung nach Anspruch 6, wobei der Querschnitt der Zierschnur (40, 58, 66, 68) kleiner als fünf Millimeter ist.

8. Polsteranordnung nach einem der Ansprüche 6 oder 7,
wobei das Innenmaß der Öffnung (38, 64, 70) in dem einheitlichen Netz (36) mindestens fünf Millimeter größer ist als der Querschnitt der Zierschnur (40, 58, 66, 68), und/oder
wobei das Innenmaß der Öffnung (38, 64, 70) in dem einheitlichen Netz (36) kleiner als zehn Millimeter ist.

9. Polsteranordnung nach einem der vorhergehenden Ansprüche, ferner umfassend einen Bezug (32) und mindestens einen Clip (48), der an den Bezug (32) angenäht ist, wobei der Clip (48) so bemessen ist, dass er die Zierschnur (40, 58, 66, 68) aufnimmt und den Bezug (32) an dem einheitlichen Netz (36) hält.

10. Polsteranordnung nach einem der vorhergehenden Ansprüche, ferner umfassend einen Bezug (32), einen Draht (44), der an den Bezug (32) angenäht ist, und mindestens einen Ring (46), um die Zierschnur (40, 58, 66, 68) mit dem Draht (44) zu verbinden.

11. Polsteranordnung nach einem der vorhergehenden Ansprüche, ferner umfassend einen Bezug (32) und mindestens einen Befestiger (50), der in den Bezug (32) eingenäht ist, wobei der Befestiger (50) so bemessen ist, dass er die Zierschnur (40, 58, 66, 68) aufnimmt und den Bezug (32) an dem einheitlichen Netz (36) hält.

## Revendications

1. Ensemble de coussin (34, 56) pour un ensemble de siège (20), comprenant :
une maille unitaire de fils de résine thermoplastique expansée (36) dans laquelle est formée une ouverture (38, 64, 70) ; et
un cordon de garniture (40, 58, 66, 68) inséré dans l'ouverture (38, 64, 70) de la maille unitaire (36),
dans lequel le cordon de garniture (40, 58, 66, 68) est installé dans l'ouverture (38, 64, 70) par un ou plusieurs des moyens suivants : le cordon de garniture (40, 58, 66, 68) est soudé à la maille unitaire de fils de résine thermoplastique expansée (36), ou un premier segment (52) des fils de résine thermoplastique expansée est soudé à un deuxième segment (54) des fils de résine thermoplastique expansée au moins partiellement au-dessus de l'ouverture (38, 64, 70), et
dans lequel une dimension interne de l'ouverture (38, 64, 70) dans la maille unitaire (36) est de 100 à 166 pour cent supérieure à une dimension en section transversale du cordon de garniture (40, 58, 66, 68).

2. Ensemble de coussin selon la revendication 1, dans lequel le cordon de garniture (40, 58, 66, 68, 66) est soudé à une région de la maille unitaire de fils de résine thermoplastique expansée (36) à l'intérieur d'un sillon (64) formé dans la maille unitaire (36).

3. Ensemble de coussin selon la revendication 1 ou 2, dans lequel le cordon de garniture (40, 58, 66, 68) est soudé à la maille unitaire de fils de résine thermoplastique expansée (36).

4. Ensemble de coussin selon l'une quelconque des revendications précédentes, dans lequel le cordon de garniture (40, 58, 66, 68) est soudé sans adhésif.

5. Ensemble de coussin selon l'une quelconque des revendications précédentes, dans lequel un segment (52) des fils de résine thermoplastique expansée est soudé à la maille unitaire de fils de résine thermoplastique expansée (36) au moins partiellement au-dessus de l'ouverture (38, 64, 70).

6. Ensemble de coussin selon l'une quelconque des revendications précédentes,
dans lequel l'ouverture (38, 64, 70) de la maille unitaire (36) présente une dimension interne, et dans lequel le cordon de garniture (40, 58, 66, 68) présente une section transversale inférieure à la dimension interne de l'ouverture (38, 64, 70), et
dans lequel la section transversale du cordon de garniture (40, 58, 66, 68) est de préférence supérieure à trois millimètres.

7. Ensemble de coussin selon la revendication 6, dans lequel la section transversale du cordon de garniture (40, 58, 66, 68) est inférieure à cinq millimètres.

8. Ensemble de coussin selon l'une quelconque des revendications 6 et 7,
dans lequel la dimension interne de l'ouverture (38, 64, 70) dans la maille unitaire (36) est d'au moins cinq millimètres supérieure à la section transversale du cordon de garniture (40, 58, 66, 68), et/ou
dans lequel la dimension interne de l'ouverture (38, 64, 70) dans la maille unitaire (36) est inférieure à dix millimètres.

9. Ensemble de coussin selon l'une quelconque des revendications précédentes, comprenant en outre un revêtement de garniture (32) et au moins une agrafe (48) cousue au revêtement de garniture (32), dans lequel l'agrafe (48) est dimensionnée pour recevoir le cordon de garniture (40, 58, 66, 68) et retenir le revêtement de garniture (32) sur la maille unitaire (36).

10. Ensemble de coussin selon l'une quelconque des revendications précédentes, comprenant en outre un revêtement de garniture (32), un fil métallique (44) cousu au revêtement de garniture (32), et au moins un anneau (46) pour attacher le cordon de garniture (40, 58, 66, 68) au fil métallique (44).

11. Ensemble de coussin selon l'une quelconque des revendications précédentes, comprenant en outre un revêtement de garniture (32) et au moins une fixation (50) cousue dans le revêtement de garniture (32), dans lequel la fixation (50) est dimensionnée pour recevoir le cordon de garniture (40, 58, 66, 68) et retenir le revêtement de garniture (32) sur la maille unitaire (36).
